# EUROPEAN PATENT APPLICATION

(11) **EP 3 734 732 A1**
(43) Date of publication of application: **04.11.2020**
(21) Application number: 18894234.6
(22) Date of filing: 18.12.2018
(51) Int. Cl.: H01M 8/18, H01M 8/04

(54) **REDOX FLOW BATTERY**

(30) Priority: 27.12.2017 JP 2017252663
(71) Applicant: Showa Denko K.K., Tokyo 105-8518 (JP)
(72) Inventor: TOMITA Miyuki, Tokyo 105-8518 (JP); SUZUKI Masahiro, Tokyo 105-8518 (JP); ZHOU Tingting, Tokyo 105-8518 (JP)
(74) Representative: Strehl Schübel-Hopf & Partner
(86) International application number: PCT/JP2018/046619
(87) International publication number: WO 2019/131340

(57) **Abstract**

The present invention provides a redox flow battery capable of inhibiting an increase in a pressure within a battery system, which is caused by generation of hydrogen gas at a negative electrode. This redox flow battery 1 has: a battery cell 10 including a positive electrode 11, a negative electrode 12, and an ion exchange membrane 13; positive electrode-side electrolyte tank 20 provided in correspondence with the positive electrode 11 and containing an electrolyte which includes a positive electrode active material; a negative electrode-side electrolyte tank 30 provided in correspondence with the negative electrode 12 and containing an electrolyte which includes a negative electrode active material; a positive electrode-side pipe connecting the battery cell 10 to the positive electrode-side electrolyte tank 20; and a negative electrode-side pipe connecting the battery cell 10 to the negative electrode-side electrolyte tank 30, wherein the redox flow battery 1 performs charge and discharge by being configured to circulate the electrolytes respectively between the battery cell 10 and the positive electrode-side electrolyte tank 20 through the positive electrode-side pipe 21, 22 connecting the battery cell 10 to the positive electrode-side electrolyte tank 20 and between the battery cell 10 and the negative electrode-side electrolyte tank 30 through the negative electrode-side pipe 31, 32 connecting the battery cell 10 to the negative electrode-side electrolyte tank 30. A hydrogen oxidation catalyst 40 is provided adjacent to an inner surface of at least a portion of the negative electrode-side pipe 31, 32.

## Description

### TECHNICAL FIELD

The present invention relates to a redox flow battery.

### BACKGROUND ART

Redox flow batteries have been known as large capacity storage batteries. In general, the redox flow battery has an ion exchange membrane separating electrolytes from each other, and electrodes provided on both sides of the ion exchange membrane. The electrolytes containing metal ions as active materials whose valence changes through oxidation-reduction are used so that an oxidation reaction at one of the electrodes and a reduction reaction at the other progress simultaneously, whereby charge and discharge are carried out.

In the redox flow battery at a high charge depth, hydrogen (H₂) gas tends to be generated because a reaction through which hydrogen ions (H⁺) receive electrons (e⁻) occurs at the negative electrode. If the generated hydrogen gas stays in a circulation system forming part of the battery, a problem arises in that the pressure in the circulation system increases. Further, this situation requires control which prevents the hydrogen gas from leaking out of the circulation system forming part of the battery, and from exploding, for example.

For example, Patent Document 1 discloses a technique to address the above problem of the generation of hydrogen gas at a negative electrode. According to this technique, in a vanadium redox battery, a hydrogen oxidation catalyst supported on a surface of a carbon material is provided on a surface of the positive electrode including a carbon material or in an area on a positive electrode side in a battery cell, so that hydrogen gas generated at the negative electrode is oxidized by the hydrogen oxidation catalyst supported on the surface of the carbon material. Patent Document 2 discloses a technique relating to a system including at least one flow battery consisting of: two half cells which are separated from each other by a separator membrane and through which electrolytes having different charges flow; and tanks each containing an associated one of the electrolytes, each of the half cells being provided with at least one electrode. In this system, a common gas volume is provided to connect the tanks to each other. Further, in the tank of the electrolyte of a positive electrode side, at least one catalyst for reducing a reaction partner of a redox pair of the positive electrode side is disposed in contact with both the electrolyte of the positive electrode side and the common gas volume.

Patent Document 1: Japanese Unexamined Patent Application, Publication No. 2016-186853
Patent Document 2: Japanese Unexamined Patent Application (Translation of PCT Application), Publication No. 2015-504233

### DISCLOSURE OF THE INVENTION

### Problems to be Solved by the Invention

However, according to the technique of Patent Document 1, it is necessary to move the hydrogen gas from the negative electrode to the positive electrode, which complicates the facility. In addition, it is necessary to support the hydrogen oxidation catalyst on the carbon material. According to the technique of Patent Document 2, it is necessary to provide, for example, the common gas volume connecting the tank of the electrolyte of the positive electrode side to the tank of the electrolyte of the negative electrode side. As a result, a limitation is imposed on the structure of the electrolyte tanks. Therefore, there has been a demand for other measures for handling hydrogen gas generated at a negative electrode.

The present invention has been proposed in view of the circumstances described above, and it is an object of the present invention to provide a redox flow battery capable of effectively inhibiting an increase in a pressure which can be caused by generation of hydrogen (H₂) gas at a negative electrode.

### Means for Solving the Problems

The present inventors have conducted intensive studies to achieve the above object. As a result, the present inventors have made findings that the above object can be achieved by providing a hydrogen oxidation catalyst adjacent to an inner surface of at least a portion of a negative electrode-side pipe connecting a negative electrode-side electrolyte tank containing an electrolyte which includes a negative electrode active material to a battery cell, and thereby have achieved the present invention. Specifically, the present invention provides the following.

A first aspect of the present invention is directed to a redox flow battery including: a battery cell including a positive electrode, a negative electrode, and an ion exchange membrane separating the positive electrode from the negative electrode; a positive electrode-side electrolyte tank provided in correspondence with the positive electrode and containing an electrolyte which includes a positive electrode active material; a negative electrode-side electrolyte tank provided in correspondence with the negative electrode and containing an electrolyte which includes a negative electrode active material; a positive electrode-side pipe connecting the battery cell to the positive electrode-side electrolyte tank; and a negative electrode-side pipe connecting the battery cell to the negative electrode-side electrolyte tank. The redox flow battery performs charge and discharge by being configured to circulate the electrolytes respectively between the battery cell and the positive electrode-side electrolyte tank through the positive electrode-side pipe connecting the battery cell to the positive electrode-side electrolyte tank and between the battery cell and the negative electrode-side electrolyte tank through the negative electrode-side pipe connecting the battery cell to the negative electrode-side electrolyte tank. A hydrogen oxidation catalyst is provided adjacent to an inner surface of at least a portion of the negative electrode-side pipe.

A second aspect of the present invention is an embodiment of the redox flow battery according to the first aspect. In the second aspect, the negative electrode-side pipe includes: a negative electrode-side forward pipe as a supply path through which the electrolyte is supplied from the negative electrode-side electrolyte tank to the battery cell; and a negative electrode-side return pipe as a discharge path through which the electrolyte is discharged from the battery cell to the negative electrode-side electrolyte tank. The hydrogen oxidation catalyst is provided adjacent to an inner surface of at least a portion of the negative electrode-side return pipe.

A third aspect of the present invention is an embodiment of the redox flow battery according to the second aspect. In the third aspect, the battery cell includes a positive electrode-side cell on a side of the positive electrode and a negative electrode-side cell on a side of the negative electrode, the positive electrode-side cell and the negative electrode-side cell being partitioned from each other by the ion exchange membrane. The negative electrode-side return pipe connects the negative electrode-side cell to the negative electrode-side electrolyte tank. The negative electrode-side cell has a discharge port through which the electrolyte is discharged, and which is located on a top of the negative electrode-side cell.

A fourth aspect of the present invention is an embodiment of the redox flow battery according to the second or third aspect. In the fourth aspect, the hydrogen oxidation catalyst is provided at a location in the negative electrode-side return pipe, the location being adjacent to the battery cell.

A fifth aspect of the present invention is an embodiment of the redox flow battery according to any one of the first to fourth aspects. In the fifth aspect, the hydrogen oxidation catalyst is provided on an inner surface of the negative electrode-side pipe.

A sixth aspect of the present invention is an embodiment of the redox flow battery according to any one of the first to fifth aspects. In the sixth aspect, the redox flow battery is a vanadium-based redox flow battery.

### Effects of the Invention

The redox flow battery according to the present invention can effectively inhibit a pressure increase that can be caused by generation of hydrogen gas at the negative electrode. Thus, the redox flow battery according to the present invention is highly reliable.

### BRIEF DESCRIPTION OF THE DRAWINGS

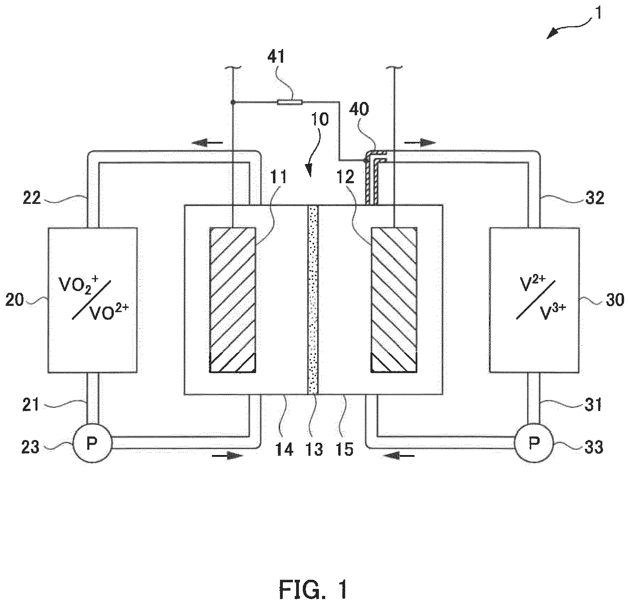

FIG. 1 schematically shows a configuration of an example of a redox flow battery according to the present embodiment.

### PREFERRED MODE FOR CARRYING OUT THE INVENTION

A specific embodiment (hereinafter, referred to as "the present embodiment") will be described in detail with reference to the drawing. It should be noted that the present invention is not limited to the following embodiment, and various modifications can be made without changing the spirit of the present invention.

FIG. 1 schematically shows a configuration of an example of a redox flow battery according to the present embodiment. As shown in FIG. 1, the redox flow battery 1 according to the present embodiment has a battery cell 10 including a positive electrode 11, a negative electrode 12, and an ion exchange membrane 13 separating the positive electrode 11 from the negative electrode 12. The redox flow battery 1 further has: a positive electrode-side electrolyte tank 20 provided in correspondence with the positive electrode 11 and containing an electrolyte which includes a positive electrode active material; a negative electrode-side electrolyte tank 30 provided in correspondence with the negative electrode 12 and containing an electrolyte which includes a negative electrode active material; a positive electrode-side pipe connecting the battery cell 10 to the positive electrode-side electrolyte tank 20; and a negative electrode-side pipe connecting the battery cell 10 to the negative electrode-side electrolyte tank 30. Specifically, in the present embodiment, the battery cell 10 includes a positive electrode-side cell 14 on a side of the positive electrode 11 and a negative electrode-side cell 15 on a side of the negative electrode 12, the positive electrode-side cell 14 and the negative electrode-side cell 15 being partitioned from each other by the ion exchange membrane 13 that separates the positive electrode 11 from the negative electrode 12. Here, the positive electrode-side cell 14 refers to a positive electrode chamber housing the positive electrode 11. The negative electrode-side cell 15 refers to a negative electrode chamber housing the negative electrode 12. The positive electrode-side cell 14 in the battery cell 10 is connected to the positive electrode-side electrolyte tank 20 through the positive electrode-side pipe, thereby allowing the positive electrode electrolyte to circulate between the positive electrode-side cell 14 and the tank 20. The negative electrode-side cell 15 in the battery cell 10 is connected to the negative electrode-side electrolyte tank 30 through the negative electrode-side pipe, thereby allowing the negative electrode electrolyte to circulate between the negative electrode-side cell 15 and the tank 30.

Note that although FIG. 1 shows the redox flow battery 1 as a redox flow battery installed alone, it is preferable to successively arrange a plurality of redox flow batteries 1, each of which is a smallest unit, and to use the plurality of redox flow batteries 1 in a form referred to as a battery cell stack.

In this embodiment, the positive electrode-side pipe that connects the battery cell 10 to the positive electrode-side electrolyte tank 20 includes: a positive electrode-side forward pipe 21 as a supply path through which the electrolyte is supplied from the positive electrode-side electrolyte tank 20 to the battery cell 10 (more strictly, to the positive electrode-side cell 14); and a positive electrode-side return pipe 22 as a discharge path through which the electrolyte is discharged from the battery cell 10 to the positive electrode-side electrolyte tank 20. The positive electrode-side forward pipe 21 is provided so as to connect the positive electrode-side electrolyte tank 20 to a bottom portion of the battery cell 10, while the positive electrode-side return pipe 22 is provided so as to connect an upper portion of the battery cell 10 to the positive electrode-side electrolyte tank 20.

Likewise, in the present embodiment, the negative electrode-side pipe that connects the battery cell 10 to the negative electrode-side electrolyte tank 30 includes: a negative electrode-side forward pipe 31 as a supply path through which the electrolyte is supplied from the negative electrode-side electrolyte tank 30 to the battery cell 10 (more strictly, to the negative electrode-side cell 15); and a negative electrode-side return pipe 32 as a discharge path through which the electrolyte is discharged from the battery cell 10 to the negative electrode-side electrolyte tank 30. The negative electrode-side forward pipe 31 is provided so as to connect the negative electrode side-electrolyte tank 30 to a bottom portion of the battery cell 10, while the negative electrode-side return pipe 32 is provided so as to connect an upper portion of the battery cell 10 to the negative electrode-side electrolyte tank 30. In the configuration shown in FIG. 1, a discharge port through which the electrolyte is discharged from the negative electrode-side cell 15 is located at the top (highest point) of the negative electrode-side cell 15. This configuration is preferable since hydrogen gas generated at the negative electrode 12 is easily released from the negative electrode-side cell 15, and consequently, the hydrogen gas is inhibited from staying in the battery cell 10. Note that the vertical direction described by terms such as the highest point indicates the vertical direction of the redox flow battery in an installed state in the present embodiment.

Further, in the present embodiment, a pump 23 is provided on the positive electrode-side forward pipe 21, and a pump 33 is provided on the negative electrode-side forward pipe 31. The pump 23 and the pump 33 may be provided on the positive electrode-side return pipe 22 and the negative electrode-side return pipe 32, respectively. However, if such feed pumps are installed on the return pipes (the positive electrode-side return pipe 22, the negative electrode-side return pipe 32) that are the discharge paths through which the electrolytes are discharged from the battery cell 10 to the electrolyte tanks (the positive electrode-side electrolyte tank 20, the negative electrode-side electrolyte tank 30), a pressure in the battery cell 10 decreases and bubbles are likely to be generated. It is therefore preferable to install the feed pumps on the forward pipes (the positive electrode-side forward pipe 21, the negative electrode-side forward pipe 31). This configuration enables the electrolytes to be fed efficiently and stably. Thus, it is preferable to provide the pump 23 and the pump 33 on the forward pipes (the positive electrode-side forward pipe 21, the negative electrode-side forward pipe 31), as in the present embodiment.

As can be seen, the redox flow battery 1 of the present embodiment includes the pump 23 on the positive electrode-side pipe and the pump 33 on the negative electrode-side pipe, and is configured to operate the pumps 23 and 33 to circulate the electrolytes through the positive electrode-side pipe (the positive electrode-side forward pipe 21, the positive electrode-side return pipe 22) connecting the battery cell 10 to the positive electrode-side electrolyte tank 20, and through the negative electrode-side pipe (the negative electrode-side forward pipe 31, the negative electrode-side return pipe 32) connecting the battery cell 10 to the negative electrode-side electrolyte tank 30. With this configuration, in the redox flow battery 1, a charge/discharge reaction occurs in the battery cell 10 while the electrolytes containing active materials are circulated, whereby storage of electric power (charge) or extraction of electric power (discharge) is implemented. The arrows shown in the drawing each indicate a direction in which the electrolyte moves (circulates) .

In this embodiment, a hydrogen oxidation catalyst 40 is provided adjacent to an inner surface of at least a portion of the negative electrode-side pipe (the negative electrode-side forward pipe 31, the negative electrode-side return pipe 32). FIG. 1 shows a case where the hydrogen oxidation catalyst 40 is provided as a hydrogen oxidation catalyst layer at a location on an inner surface of the negative electrode-side return pipe 32, the location being adjacent to the battery cell 10.

Here, in the redox flow battery 1, an oxidation reaction or a reduction reaction occurs at the positive electrode 11 or the negative electrode 12 at the time of charge or discharge. The reactions occurring in a vanadium-based redox flow battery are described below as examples.

### [Charge]

Positive electrode:

   VO²⁺ + H₂O → VO²⁺ + e⁻ + 2H⁺
Negative electrode:

   V³⁺ + e⁻ → V²⁺

### [Discharge]

Positive electrode:

   VO²⁺ + e⁻ + 2H⁺ → VO²⁺ + H₂O
Negative electrode:

   V²⁺ → V³⁺ + e⁻

In the redox flow battery, during charge, particularly during charge at a high charge depth, hydrogen (H₂) gas may be generated because a reaction through which hydrogen ions (H⁺) receive electrons (e⁻) occurs at the negative electrode 12. The hydrogen gas generated in this way stays in the battery cell 10 and in the negative electrode-side electrolyte tank 30 and the negative electrode-side pipe after circulating together with the electrolyte. In particular, the hydrogen gas tends to adhere, in the form of bubbles, to the inner surface of the pipe connecting the battery cell 10 to the negative electrode-side electrolyte tank 30. It is therefore likely that the hydrogen gas stays in this pipe. Hydrogen staying in the system of the battery causes a problem in that a pressure increases. To address this problem, in the present embodiment, the hydrogen oxidation catalyst 40 is provided adjacent to the inner surface of the negative electrode-side pipe through which the hydrogen gas generated at the negative electrode 12 circulates together with the electrolyte. Therefore, the hydrogen (H₂) gas generated at the negative electrode 12 comes into contact with the hydrogen oxidation catalyst 40 provided adjacent to the inner surface of the negative electrode-side pipe, and consequently, is oxidized to be converted into hydrogen ions (H⁺). Thus, the generated hydrogen gas is converted into hydrogen ions through oxidation, and thereafter, the hydrogen ions are dissolved back into the electrolyte.

The oxidation of hydrogen is a reaction represented by the formula below. In order to allow the oxidation of hydrogen to occur continuously and efficiently, it is preferable to actively remove electrons (e⁻) generated by the oxidation of hydrogen. For this purpose, it is suitable to make the portion of the negative electrode-side pipe, where the hydrogen oxidation catalyst is provided, electrically conductive, and to electrically connect this conductive portion of the pipe to a potential higher than a potential of the negative electrode 12. For example, as shown in FIG. 1, the conductive portion is connected to the positive electrode 11 via a resistor 41 such that a current that is large enough to remove the generated electrons (e⁻) is produced.

H₂ → 2H⁺ + 2e⁻

As can be seen, in the present embodiment, even if hydrogen gas is generated at the negative electrode 12, the hydrogen gas is brought into contact with the hydrogen oxidation catalyst 40 provided adjacent to the inner surface of the negative electrode-side pipe, so that the hydrogen gas is oxidized and converted back into hydrogen ions. This feature inhibits the hydrogen gas from staying in the circulation system, such as the negative electrode-side pipe, the negative electrode-side electrolyte tank 30, and the battery cell 10. As a result, a pressure increase in the circulation system can be inhibited effectively. Thus, the redox flow battery of the present embodiment is highly reliable because it can effectively inhibit the pressure increase that can be caused by generation of hydrogen gas. Further, according to the present embodiment, in which the hydrogen oxidation catalyst is provided in the negative electrode-side pipe, it is no longer necessary to move hydrogen from the negative electrode side to the positive electrode side, unlike the technique of Paten Document 1. Furthermore, unlike the technique of Patent Document 2, in the present embodiment, there is no need to design the positive electrode-side electrolyte tank 20 and the negative electrode-side electrolyte tank 30 to have a special structure. In the present embodiment, no particular limitation is imposed on the structure of the positive electrode-side electrolyte tank 20 and the negative electrode-side electrolyte tank 30, and various structures can be adopted.

While the hydrogen oxidation catalyst can be suitably provided adjacent to the inner surface of the negative electrode-side pipe, it is preferable to provide the hydrogen oxidation catalyst at a location in the negative electrode-side pipe where hydrogen is likely to stay. For example, although the hydrogen oxidation catalyst may be provided in the negative electrode-side forward pipe 31 or the negative electrode-side return pipe 32, it is preferable to provide it in the negative electrode-side return pipe 32, as in the present embodiment. Since the negative electrode-side return pipe 32 is a discharge path through which the electrolyte is discharged from the battery cell 10 to the negative electrode-side electrolyte tank 30, by providing the hydrogen oxidation catalyst in the negative electrode-side return pipe 32, the hydrogen gas generated at the negative electrode 12 in the battery cell 10 can be oxidized and converted into hydrogen ions at an early stage.

Although the hydrogen oxidation catalyst may be provided at any location adjacent to the inner surface of the negative electrode-side return pipe 32, it is preferable to provide the hydrogen oxidation catalyst at a location in the negative electrode-side return pipe 32 that is adjacent to the battery cell 10, as shown in FIG. 1. That is, the hydrogen oxidation catalyst is preferably provided at a location in the negative electrode-side return pipe 32 that is in a vicinity of the electrolyte outlet (discharge port) of the battery cell 10, the electrolyte outlet being close to the negative electrode 12 at which hydrogen gas is generated. This is because in the negative electrode-side return pipe 32, the connection portion with the battery cell 10 is close to the negative electrode 12, and the hydrogen gas generated at the negative electrode 12 tends to stay in the connection portion. Note that FIG. 1 shows, as an example, a device configuration in a case where the battery cell 10 and the negative electrode-side electrolyte tank 30 are arranged side by side. In this example, the negative electrode-side return pipe 32 is composed: of a first vertical pipe portion extending substantially vertically upward from an upper portion of the battery cell 10; a horizontal pipe portion connected to the vertical pipe portion and extending substantially horizontally; and a second vertical pipe portion connected to the horizontal pipe portion and to an upper portion of the negative electrode-side electrolyte tank 30, and extending substantially vertically downward. The hydrogen oxidation catalyst 40 is provided over the connection portion of the negative electrode-side return pipe 32 with the battery cell 10 and a vicinity of the connection portion (preferably, over the entire first vertical pipe portion) in this example.

Further, the hydrogen oxidation catalyst 40 can be provided in any form adjacent to the inner surface of the negative electrode-side pipe. For example, the hydrogen oxidation catalyst 40 may be formed by coating the inner surface of the negative electrode-side pipe with a hydrogen oxidation catalyst, as shown in FIG. 1. The hydrogen oxidation catalyst 40 may be a particulate hydrogen oxidation catalyst supported on the inner surface of the negative electrode-side pipe. It is suitable that the hydrogen oxidation catalyst 40 can oxidize and convert at least part of the hydrogen gas generated at the negative electrode 12 into hydrogen ions. However, the hydrogen oxidation catalyst 40 preferably converts all hydrogen gas generated at the negative electrode 12 into hydrogen ions.

Further, the hydrogen oxidation catalyst 40 is suitably provided adjacent to the inner surface of the negative electrode-side pipe, i.e., in the negative electrode-side pipe such that the hydrogen gas can contact with the hydrogen oxidation catalyst 40. For example, a network member having mesh allowing the electrolyte to pass therethrough and supporting the hydrogen oxidation catalyst may be disposed in the negative electrode-side pipe so that the network member is transverse to the flow of the electrolyte.

In FIG. 1, the hydrogen oxidation catalyst 40 is provided in a portion of the negative electrode-side return pipe 32. However, the hydrogen oxidation catalyst 40 is suitably provided in at least a portion of the negative electrode-side pipe. For example, the hydrogen oxidation catalyst 40 may be provided on the entire inner surface of the negative electrode-side return pipe 32, or on the entire inner surface of the negative electrode-side forward pipe 31 and the entire inner surface of the negative electrode-side return pipe 32.

The hydrogen oxidation catalyst provided in the negative electrode-side pipe may be any catalyst as long as it is capable of oxidizing hydrogen. Examples of the hydrogen oxidation catalyst include a metal such as cobalt (Co), ruthenium (Ru), rhodium (Rh), palladium (Pd), osmium (Os), iridium (Ir), platinum (Pt), an alloy thereof, and an oxide thereof.

In the redox flow battery 1 according to the present embodiment, the positive electrode 11 and the negative electrode 12 are not limited to particular electrodes, and known electrodes can be employed as the positive and negative electrodes 11 and 12. It is preferable that each of the electrodes 11 and 12 simply provide a place where the active material in the electrolyte causes the oxidation-reduction reaction in the battery cell 10 while the electrode per se do not react, have a structure and a shape with high permeability for the electrolyte, have as large a surface area as possible, and be low in electric resistance. Furthermore, from the viewpoint of activation of the oxidation-reduction reaction, the electrodes 11 and 12 preferably have a high affinity with the electrolyte (aqueous solution). In addition, from the viewpoint of prevention of decomposition of water as a side reaction, the electrodes 11 and 12 preferably have a high hydrogen overvoltage and a high oxygen overvoltage. Examples of the electrodes 11 and 12 include carbon materials such as carbon felt, a carbon nanotube, and a graphitized material thereof.

In the redox flow battery 1 according to the present embodiment, the electrolyte including the positive electrode active material and the electrolyte including the negative electrode active material are not particularly limited, either. Electrolytes for use in conventional redox flow batteries can be employed in the redox flow battery 1. For example, in a case where the redox flow battery 1 is a vanadium-based redox flow battery, the electrolyte including the positive electrode active material is a sulfuric acid aqueous solution of a vanadium salt, i.e., a sulfuric acid aqueous solution containing tetravalent vanadium and/or pentavalent vanadium. In a charged state, the electrolyte including the positive electrode active material can be in a state where tetravalent/pentavalent vanadium ions are mixed or in a state where pentavalent vanadium ions are contained alone. In the case where the redox flow battery 1 is a vanadium-based redox flow battery, the electrolyte including the negative electrode active material is a sulfuric acid aqueous solution of a vanadium salt, i.e., a sulfuric acid aqueous solution containing divalent and/or trivalent vanadium. In a charged state, the electrolyte including the negative electrode active material can be in a state where divalent/trivalent vanadium ions are mixed or in a state where divalent vanadium ions are contained alone. It is suitable that each of the electrolyte including the positive electrode active material and the electrolyte including the negative electrode active material be an aqueous solution containing at least one electrochemically active species. Examples of the electrochemically active species include a metal ion such as a manganese ion, a titanium ion, a chromium ion, a bromine ion, an iron ion, a zinc ion, a cerium ion, and a lead ion.

In the redox flow battery 1 according to the present embodiment, the ion exchange membrane 13 is a separator membrane which allows protons (H⁺) as a charge carrier to pass therethrough, and which blocks other ions. As the ion exchange membrane, a known cation exchange membrane can be used. Specific examples of the ion exchange membrane include a perfluorocarbon polymer having a sulfonic acid group, a hydrocarbon-based polymer compound having a sulfonic acid group, a polymer compound doped with an inorganic acid such as phosphoric acid, an organic/inorganic hybrid polymer partially substituted with a functional group having proton conductivity, and a proton conductor constituted by a polymer matrix impregnated with a phosphoric acid solution or a sulfuric acid solution. Among these, a perfluorocarbon polymer having a sulfonic acid group is preferable, and Nafion® is more preferable.

As described above, the redox flow battery 1 according to the present embodiment, in which the hydrogen oxidation catalyst 40 is provided adjacent to the inner surface of at least a portion of the negative electrode-side pipe (the negative electrode-side forward pipe 31, the negative electrode-side return pipe 32) connecting the battery cell 10 to the negative electrode-side electrolyte tank 30, is capable of effectively inhibiting a pressure increase that can be caused by generation of hydrogen gas at the negative electrode 12. Thus, the redox flow battery 1 with high reliability can be provided.

### EXPLANATION OF REFERENCE NUMERALS

- 1:: Redox Flow Battery
- 10:: Battery Cell
- 11:: Positive Electrode
- 12:: Negative Electrode
- 13:: Ion Exchange Membrane
- 14:: Positive Electrode-Side Cell
- 15:: Negative Electrode-Side Cell
- 20:: Positive Electrode-Side Electrolyte Tank
- 21:: Positive Electrode-Side Forward Pipe
- 22:: Positive Electrode-Side Return Pipe
- 23:: Pump
- 30:: Negative Electrode-Side Electrolyte Tank
- 31:: Negative Electrode-Side Forward Pipe
- 32:: Negative Electrode-Side Return Pipe
- 33:: Pump
- 40:: Hydrogen Oxidation Catalyst
- 41:: Resistor

## Claims

1. A redox flow battery comprising:
a battery cell including a positive electrode, a negative electrode, and an ion exchange membrane separating the positive electrode from the negative electrode;
a positive electrode-side electrolyte tank provided in correspondence with the positive electrode and containing an electrolyte which includes a positive electrode active material;
a negative electrode-side electrolyte tank provided in correspondence with the negative electrode and containing an electrolyte which includes a negative electrode active material;
a positive electrode-side pipe connecting the battery cell to the positive electrode-side electrolyte tank; and
a negative electrode-side pipe connecting the battery cell to the negative electrode-side electrolyte tank, wherein
the redox flow battery performs charge and discharge by being configured to circulate the electrolytes respectively between the battery cell and the positive electrode-side electrolyte tank through the positive electrode-side pipe connecting the battery cell to the positive electrode-side electrolyte tank and between the battery cell and the negative electrode-side electrolyte tank through the negative electrode-side pipe connecting the battery cell to the negative electrode-side electrolyte tank, and
a hydrogen oxidation catalyst is provided adjacent to an inner surface of at least a portion of the negative electrode-side pipe.

2. The redox flow battery according to claim 1, wherein the negative electrode-side pipe includes:
a negative electrode-side forward pipe as a supply path through which the electrolyte is supplied from the negative electrode-side electrolyte tank to the battery cell; and
a negative electrode-side return pipe as a discharge path through which the electrolyte is discharged from the battery cell to the negative electrode-side electrolyte tank, and
the hydrogen oxidation catalyst is provided adjacent to an inner surface of at least a portion of the negative electrode-side return pipe.

3. The redox flow battery according to claim 2, wherein
the battery cell includes a positive electrode-side cell on a side of the positive electrode and a negative electrode-side cell on a side of the negative electrode, the positive electrode-side cell and the negative electrode-side cell being partitioned from each other by the ion exchange membrane,
the negative electrode-side return pipe connects the negative electrode-side cell to the negative electrode-side electrolyte tank, and
the negative electrode-side cell has a discharge port through which the electrolyte is discharged, and which is located on a top of the negative electrode-side cell.

4. The redox flow battery according to claim 2 or 3, wherein
the hydrogen oxidation catalyst is provided at a location in the negative electrode-side return pipe, the location being adjacent to the battery cell.

5. The redox flow battery according to any one of claims 1 to 4, wherein
the hydrogen oxidation catalyst is provided on an inner surface of the negative electrode-side pipe.

6. The redox flow battery according to any one of claims 1 to 5,
the redox flow battery being a vanadium-based redox flow battery.
